# EUROPÄISCHE PATENTSCHRIFT

(11) **EP 2 108 049 B1**
(45) Veröffentlichungstag und Bekanntmachung des Hinweises auf die Patenterteilung: **27.02.2013**
(21) Anmeldenummer: 07856087.7
(22) Anmeldetag: 10.12.2007
(51) Int. Cl.: C21C 5/28

(54) **VERFAHREN UND ANLAGE ZUR ERZEUGUNG VON STAHL**
PROCESS AND PLANT FOR PRODUCING STEEL
PROCÉDÉ ET INSTALLATION DE PRODUCTION D'ACIER

(30) Priorität: 04.01.2007 DE 102007001098
(43) Veröffentlichungstag der Anmeldung: 14.10.2009
(73) Patentinhaber: SMS Siemag Aktiengesellschaft, 40237 Düsseldorf (DE)
(72) Erfinder: KLEINSCHMIDT, Guido, 47447 Moers (DE); SCHLÜTER, Jochen, 44265 Dortmund (DE); WEISCHEDEL, Walter, 40670 Meerbusch (DE); FALKENRECK, Udo, 44797 Bochum (DE)
(74) Vertreter: Klüppel, Walter
(86) Internationale Anmeldenummer: PCT/DE2007/002236
(87) Internationale Veröffentlichungsnummer: WO 2008/080379

(56) Entgegenhaltungen:
- EP-A- 0 217 094
- EP-A- 0 468 832
- DE-A1-102005 032 929
- JP-A- 54 023 017
- US-A- 3 484 088

## Beschreibung

Die Erfindung betrifft ein Verfahren und eine Anlage zur Erzeugung von Stahl und zur Gewinnung von Schlacke mit einem hohen Gehalt an zusätzlichen Elementen wie Vanadium in einem zweistufigen Verfahren, wobei das flüssige Roheisen zunächst bei niedrigerer Temperatur auf eine hochwertige Schlacke verblasen wird, die nach dem Abstich gesondert weiter verarbeitet wird, während das Roheisen mindestens einem weiteren Konverter zugeführt wird, in dem oder in denen es bei höherer Temperatur zu Stahl verblasen wird.

Die Verarbeitungszeiten im ersten Konverter, in dem auf die Erzeugung der hochwertigen Schlacke gearbeitet wird, sind wesentlich kürzer als die zur Herstellung des Stahls in der zweiten Konverterstufe. Um diesen Nachteil auszuräumen, ohne das eine Wartezeit zum Ausgleich der unterschiedlichen Zyklen angesetzt werden muss, werden in der Praxis in dieser zweiten Verarbeitungsstufe häufig zwei Konverter eingesetzt.

Ein weiteres Problem, das berücksichtigt werden muss, besteht darin, dass die Arbeitstemperatur in der ersten Stufe etwa bei 1400°C liegt, während in der Stahlerzeugungsstufe die Temperatur bei etwa 1680°C liegt.

Während somit bei einer zweistufigen Anlage Wartezeiten unausbleiblich zwischen der ersten, schnelleren, und.der zweiten Stufe auftreten, ergibt sich für die Anlage mit zwei nachgeschalteten Konvertern für die Stahlherstellung eine nicht vollständige Auslastung beider Konverter der zweiten Stufe.

Aus der JP 54 023017 A ist ein Verfahren zur Erzeugung von Stahl und Gewinnung von Schlacke in einem mehrstufigen Verfahren bekannt, wobei flüssiges Roheisen erst auf eine Schlacke und in einem zweiten Konverter auf Stahl verblasen wird. Zwischen dem ersten und dem zweiten Konverter ist ein Pfannenofen vorgesehen.
Aus der EP 0 217 094 A ist ferner eine Pfanne zum Warmhalten einer metallurgischen Schmelze bekannt.

Abgesehen davon, sind natürlich für zwei Konverter in der zweiten Stufe insgesamt höhere Investitionskosten notwendig.

Verfahrensmäßig ergeben sich schließlich auch noch Nachteile bei der Anlage mit nur einem Konverter je Stufe, weil durch die notwendige Wartezeit vor Einsatz in den zweiten Konverter, also bevor dieser wieder frei ist, Produktionverluste und unter Umständen auch erhebliche Probleme für die Schmelze, weil Anfrierungen am Transportgefäß nicht vermieden werden können.

Der Erfindung liegt daher die Aufgabe zugrunde, ein Verfahren und eine Anlage zu schaffen, mit der die vorstehenden Nachteile vermieden werden und einerseits eine hochwertige Schlacke erzeugbar ist und andererseits auch das gesamte Herstellungsverfahren für den Stahl verkürzt werden kann.

Gelöst wird diese Aufgabe erfindungsgemäß bei einem Verfahren zur Erzeugung von Stahl und zur Gewinnung von Schlacke mit einem hohen Gehalt an zusätzlichen Elementen wie Vanadium in einem zweistufigen Verfahren, wobei flüssiges Roheisen zunächst bei niedrigerer Temperatur auf eine hochwertige Schlacke verblasen wird, die nach dem Abstich gesondert weiter verarbeitet wird, während das Roheisen mindestens einem weiteren Konverter zugeführt wird, in dem oder in denen es bei höherer Temperatur zu Stahl verblasen wird, dadurch,
dass während des Verblasens des Roheisens auf die höherwertige Schlacke in dem ersten Konverter in dem zweiten Konverter das vorher aus dem ersten Konverter abgestochene Roheisen zu Stahl verblasen wird,
dass nach dem Abstich der höherwertigen Schlacke beim ersten Konverter das Roheisen in ein Transportgefäß abgestochen und zwischengespeichert wird, bis der zweite Konverter das vorher aufgegeben Roheisen zu Stahl verblasen hat,
wobei während der Zwischenspeicherung das Roheisen einer Aufheiz- und/oder
Warmhaltephase durch Einblasen von Sauerstoff unterzogen wird.

Die Anlage zur Durchführung des Verfahrens ist gekennzeichnet durch einen ersten Konverter zum Verblasen von flüssigem Roheisen, mindestens einem weiteren Konverter zur Aufnahme des aus dem ersten Konverter abgestochenen, metallischen Zwischenproduktes und Erzeugen von Rohstahl sowie einem Heizstand zwischen dem ersten und dem zweiten Konverter, der zur Aufnahme von mehreren Transportgefäßen ausgelegt ist, in dem die den Transport des metallischen Zwischenproduktes vom ersten zum zweiten Konverter übernehmenden Transportgefäße absetzbar sind,
wobei im Heizstand eine Einrichtung zum Einblasen von Sauerstoff in das Transportgefäß vorgesehen ist.

Mit dem erfindungsgemäßen Verfahren wird einerseits erreicht, dass die Zykluszeiten zwischen dem Blasen im ersten Konverter und der Herstellung des Roheisens im zweiten Konverter, was wesentlich langsamer abläuft, keine Rolle mehr spielen, weil dieser Zeitaum im Heizstand überbrückt werden kann.

Durch das Zuführen von Sauerstoff, mittels einer Blaslanze, wird ein Teil des in dem metallischen Zwischenprodukt befindlichen Kohlenstoffs verbrannt. Die eingeblasene Sauerstoffmenge kann nun unterschiedlich dosiert werden, und zwar besteht die Möglichkeit lediglich die Temperatur während des Wartezyklus zu halten, also die üblicherweise auftretenden Temperaturverluste auszugleichen.

Andererseits kann aber auch eine größere Sauerstoffmenge zugeführt werden. Hierdurch wird wiederum erreicht, dass durch den höheren Kohlenstoffabbrand der Blasprozeß in dem nachfolgenden Konverter verkürzt werden kann. Gleichzeitig wird aber auch durch den höheren Abbrand des Kohlenstoffs dieTemperatur der Schmelze erhöht, so dass die für den zweiten Blasprozeß höhere Temperatur von etwa 1680°C schon zur Übergabe an den zweiten Konverter eingestellt werden kann. Auch dadurch verkürzt sich die Behandlungszeit bei dieser zweiten Blasstufe erheblich.

Durch die somit insgesamt verkürzte Behandlungszeit in der Anlage kann die Produktivität wesentlich gesteigert werden, bei vergleichsweise geringeren Anlagekosten gegenüber einer Anlage mit drei Konvertern und der Einschränkung durch den notwendigen Zyklusausgleich.

Die Erfindung soll nachfolgen erläutert werden, und zwar mit Bezug auf die Zeichnungen.

Darin zeigt:

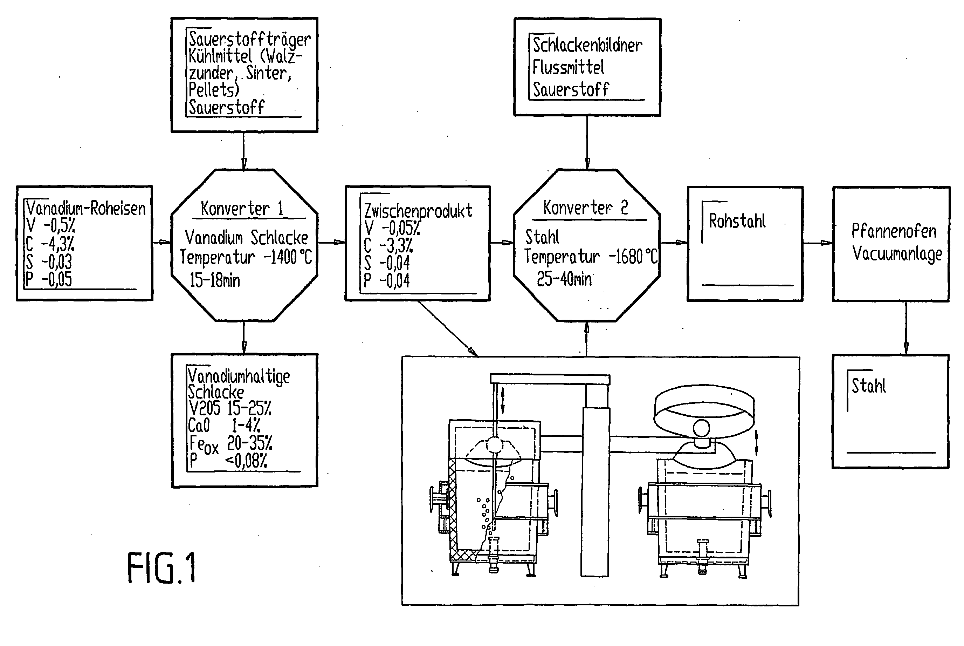

- Fig. 1: schematisch den Verahrensablauf bei einer erfindungsgemäßen Anlage mit einem Heizstand,
- Fig. 2: schematische den Heizstand,
- Fig. 3: eine zweistufige Anlage nach dem Stand der Technik mit drei Konvertern und
- Fig. 4: eine entsprechende Anlage mit zwei Konvertern.

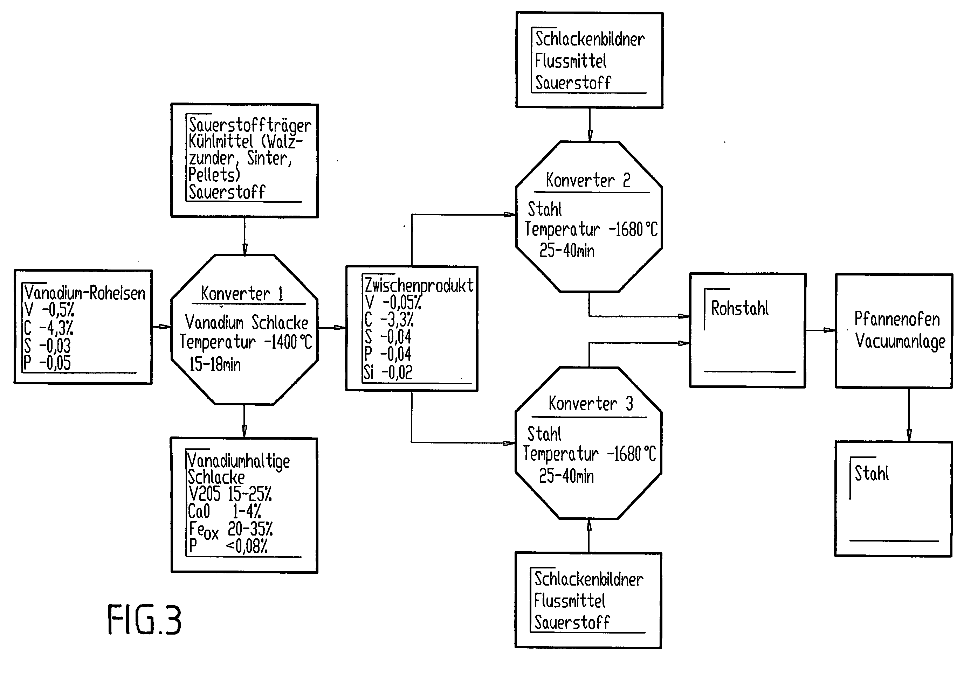

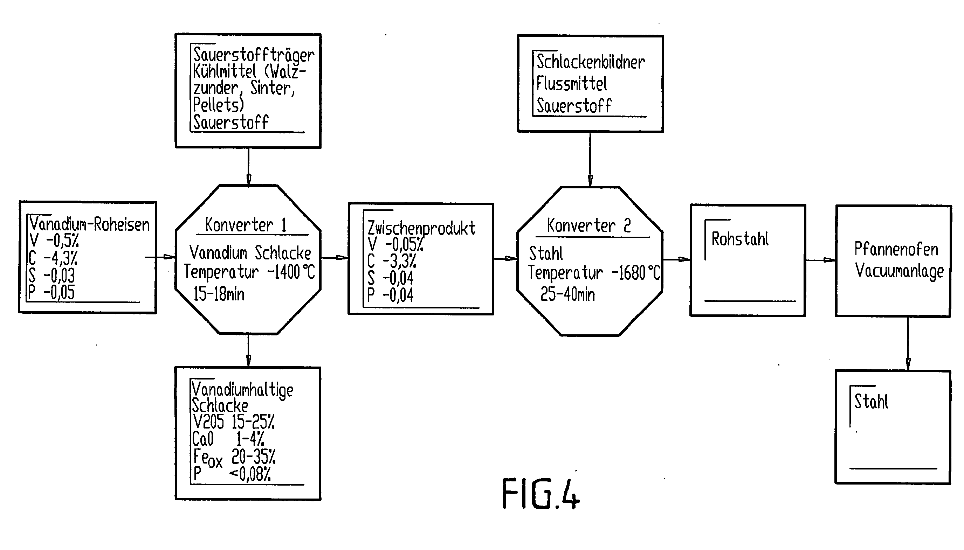

Zunächst sei auf die Figuren 3 und 4 verwiesen, die zeigen, dass das flüssige Roheisen zunächst im Konverter 1 mit dem Ziel der Erreichung einer hochwertigen Schlacke verblasen wird. Die Temperatur liegt hier bei etwa 1400°C. Nach dem Abstich der Schlacke, die dann einer Rafinierung zugeführt wird, wird das metallische Zwischenprodukt, nach einer zwangsbedingten Wartepause, zwei Konvertern 2 und 3 zugeführt und dort bei etwa 1680°C zu Rohstahl verblasen, der dann einer weiteren Behandlung, beispielsweise in einer Vakuumanlage unterworfen wird.

Wie eingangs erwähnt, ist bei einer derartigen Anlage mit zwei nachgeschalteten Konvertern häufig keine ausreichende Auslastung für diese zu erreichen. Dieser Nachteil tritt bei der Anlage nach Figur 4 nicht auf, aber hier spielen die Wartezeiten, mit den der Blaszyklus des ersten Konverters an den zweiten Konverter angepasst werden muss, eine erhebliche - negative - Rolle.

Abhilfe schafft hier nun die erfindungsgemäße Anlage, bei de ein Heizstand zwischen den beiden Konverterstufen vorgesehen ist.

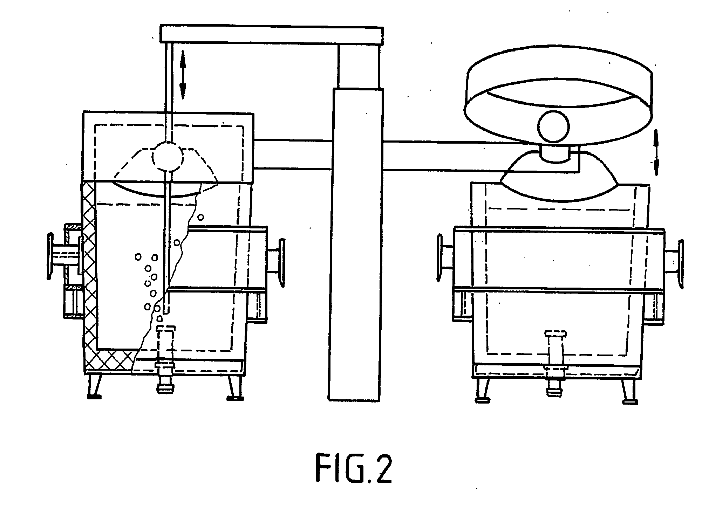

Die Figur 2 zeigt schematich, wie dieser Heizstand aussehen kann, und zwar am Beispiel einer Anlage mit zwei Aufnahmen für Transportgefäße. In der linken Darstellung befindet sich das Transportgefäß mit demr darin enthaltenen metallischen Zwischenprodukt in der Blasposition, in der durch eine Lanze Sauerstoff zugeführt bw. Eingeblasen wird. In der rechten Darstellung ist ein Transportgefäß gezeigt, das mit einem Deckel verschließbar ist.

## Patentansprüche

1. Verfahren zur Erzeugung von Stahl und zur Gewinnung von Schlacke mit einem hohen Gehalt an zusätzlichen Elementen wie Vanadium in einem zweistufigen Verfahren, wobei flüssiges Roheisen zunächst bei niedrigerer Temperatur auf eine hochwertige Schlacke verblasen wird, die nach dem Abstich gesondert weiter verarbeitet wird, während das Roheisen mindestens einem weiteren Konverter zugeführt wird, in dem oder in denen es bei höherer Temperatur zu Stahl verblasen wird,
**dadurch gekennzeichnet,**
**dass** während des Verblasens des Roheisens auf die höherwertige Schlacke in dem ersten Konverter in dem zweiten Konverter das vorher aus dem ersten Konverter abgestochene Roheisen zu Stahl verblasen wird,
**dass** nach dem Abstich der höherwertigen Schlacke beim ersten Konverter das Roheisen in ein Transportgefäß abgestochen und zwischengespeichert wird, bis der zweite Konverter das vorher aufgegeben Roheisen zu Stahl verblasen hat,
wobei während der Zwischenspeicherung das Roheisen einer Aufheiz- und/oder Warmhaltephase durch Einblasen von Sauerstoff unterzogen wird.

2. Anlage zur Durchführung des Verfahrens nach Anspruch 1,
**gekennzeichnet durch**
einen ersten Konverter zum Verblasen von flüssigem Roheisen, mindestens einem weiteren Konverter zur Aufnahme des aus dem ersten Konverter abgestochenen, metallischen Zwischenproduktes und Erzeugen von Rohstahl sowie einem Heizstand zwischen dem ersten und dem zweiten Konverter, der zur Aufnahme von mehreren Transportgefäßen ausgelegt ist, in dem die den Transport des metallischen Zwischenproduktes vom ersten zum zweiten Konverter übernehmenden Transportgefäße absetzbar sind,
wobei im Heizstand eine Einrichtung zum Einblasen von Sauerstoff in das Transportgefäß vorgesehen ist.

## Claims

1. Method of producing steel and of obtaining slag with a high content of additional elements, such as vanadium, in a two-stage process, wherein liquid pig iron is initially converted at lower temperature to form a high-quality slag, which after tapping undergoes special further processing, whilst the pig iron is fed to at least one further converter, in which further converter or converters it is converted at higher temperature into steel, **characterised in that** during the conversion of the pig iron into the higher quality slag in the first converter the pig iron previously tapped from the first converter is converted in the second converter into steel and that after tapping of the higher quality slag at the first converter the pig iron is discharged into a transport vessel and intermediately stored until the second converter has converted the previously delivered pig iron into steel, wherein during the intermediate storage the pig iron is subjected to a heating and/or keeping-warm phase by injection of oxygen.

2. Plant for carrying out the method according to claim 1, **characterised by** a first converter for converting liquid pig iron, at least one further converter for receiving the metallic intermediate product tapped from the first converter and for producing raw steel, as well as, between the first and second converters, a heating station which is designed to receive a plurality of transport vessels and in which the transport vessels taking over transport of the metallic intermediate product from the first to the second converter can be deposited, wherein equipment for injection of oxygen into the transport vessel is provided in the heating station.

## Revendications

1. Procédé pour la production d'acier et pour la récupération d'une scorie possédant une teneur élevée en éléments supplémentaires tels que le vanadium dans un procédé en deux étapes, dans lequel on traite par soufflage de la fonte brute liquide dans un premier temps à une température inférieure pour obtenir une scorie de valeur élevée, tandis que l'on achemine la fonte brute à au moins un premier convertisseur dans lequel ou dans lesquels on la soumet à un traitement par soufflage à une température supérieure pour obtenir de l'acier, **caractérisé en ce qu'**au cours du traitement par soufflage de la fonte brute pour obtenir la scorie de valeur supérieure dans le premier convertisseur, on soumet, dans le deuxième convertisseur, à un traitement par soufflage la fonte brute que l'on a laissé couler au préalable à partir du premier convertisseur, pour obtenir de l'acier, et **en ce qu'**après avoir laissé couler la scorie de valeur supérieure dans le premier convertisseur, on laisse couler la fonte brute dans un récipient de transport et on la soumet à un entreposage intermédiaire jusqu'à ce que le deuxième convertisseur soumette la fonte brute abandonnée au préalable, à un traitement par soufflage pour obtenir de l'acier, procédé dans lequel, au cours de l'entreposage intermédiaire, on soumet la fonte brute à une phase d'échauffement et/ou de maintien à température par insufflation d'oxygène.

2. Installation pour la mise en oeuvre du procédé selon la revendication 1, **caractérisée par** un premier convertisseur pour le traitement par soufflage de la fonte brute liquide, par au moins un convertisseur supplémentaire pour la réception du produit intermédiaire métallique que l'on a laissé couler à partir du premier convertisseur et pour la production d'acier brut, et par un poste de chauffage entre le premier et le deuxième convertisseur, qui est dimensionné pour la réception de plusieurs récipients de transport, dans lequel les récipients de transport prenant en charge le transport du produit intermédiaire métallique entre le premier et le deuxième convertisseur peuvent être déposés, installation dans laquelle on prévoit au poste de chauffage un mécanisme pour insuffler de l'oxygène dans le récipient de transport.
